# EUROPEAN PATENT APPLICATION

(11) **EP 1 152 630 A1**
(43) Date of publication of application: **07.11.2001**
(21) Application number: 00401230.8
(22) Date of filing: 05.05.2000
(51) Int. Cl.: H04Q 11/00, G02B 6/35

(54) **An integrated multi-stage planar optical switch**

(71) Applicant: Corning Incorporated, Corning, New York 14831 (US)
(72) Inventor: Guiziou, Laurent, Corning, NY 14831 (US)
(74) Representative: Boon, Graham Anthony

(57) **Abstract**

A planar device having rows of M optical circuit stages is disclosed. Each optical circuit stage is connected to an adjacent optical circuit stage by N parallel waveguides. The N parallel waveguides have substantially no curvature. The circuit layout of the planar device increases the number of components that can be disposed on a wafer. Defective portions of the device can be readily isolated such that production defects do not render the entire device unusable. The planar device of the present invention eliminates many of the problems associated with waveguide curvature between optical circuit stages.

## Description

### Background of the Invention

### 1. Field of the Invention

The present invention relates generally to planar devices, and particularly to multi-stage planar optical circuit devices.

### 2. Technical Background

In general, the topology of an optical network may include any number of optical signal paths interconnected by a series of network nodes to form a mesh. The optical signal paths often employ amplifiers and gain flattening filters (GFF). The network nodes may include optical switches, optical cross-connects (OXC), or Add/Drop multiplexers. Optical signals are attenuated as they propagate through optical fiber and amplifiers are used to restore the signal strength. In erbium-doped fiber amplifiers different wavelengths undergo different degrees of amplification. GFFs are used to flatten the spectrum and produce signal uniformity. A reconfigurable optical switch or OXC functions to route the traffic between signal paths in the mesh. The Add/Drop multiplexer directs traffic carried by a trunk fiber into a tributary or local fiber.

Currently, designers are seeking to use planar optical circuits in amplifier, GFF, OXC, and Add/Drop multiplexer implementations. Planar optical circuit technology is promising because compact integrated optical devices having many optical circuits disposed on a single wafer can be fabricated. One area that is particularly promising relates to space division optical switches. Space division optical switches are key components in optical path cross-connect (OXC) systems, add-drop multiplexing (ADM), and protection switches.

In one approach, 8 x 8 and 16 x 16 strictly non-blocking integrated optical matrix switches have been demonstrated. The switches were implemented using low loss silica on a silicon substrate and achieved a high extinction ratio. It is envisioned that integrated optical matrix switches will ultimately enable the fabrication of a compact N x N switch fabric.

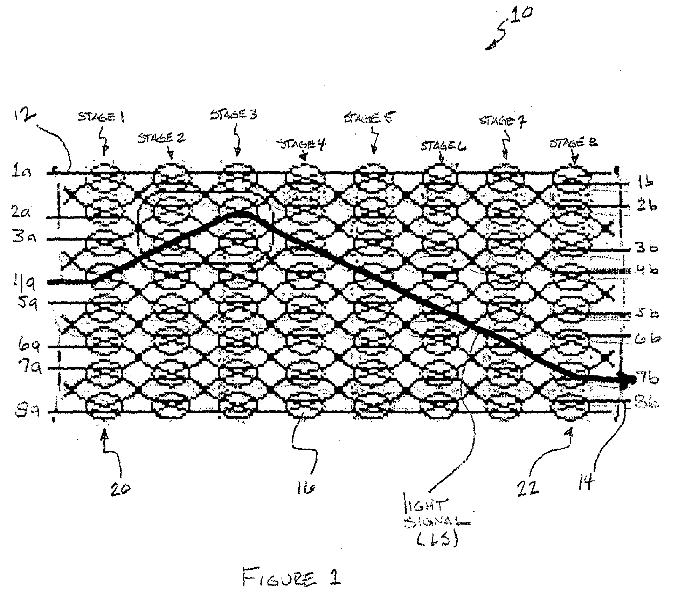

Figure 1 is a schematic of the 8 x 8 strictly non-blocking integrated optical matrix switch 10 discussed above. Eight input waveguides 12 are connected to the first stage 20. Each stage 20 consists of eight switching units 16. The eighth stage 22 is connected to output waveguides 14. Switching unit 16 is a double Mach-Zehnder Interferometer (MZI) using a thermooptic switch actuator. MZI switching units 16 are attractive because they achieve a high extinction ratio. The utility of switch 10 is illustrated in Figure 1. Light signal (LS) is directed into input waveguide 4a and is propagated through each stage of matrix 10 by switching units 16 until it is directed out of output waveguide 7b.

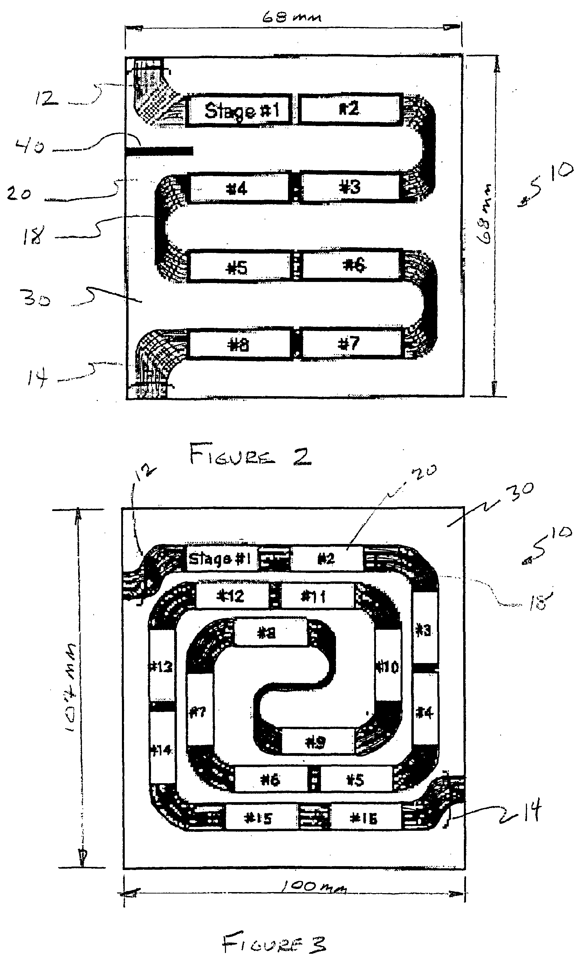

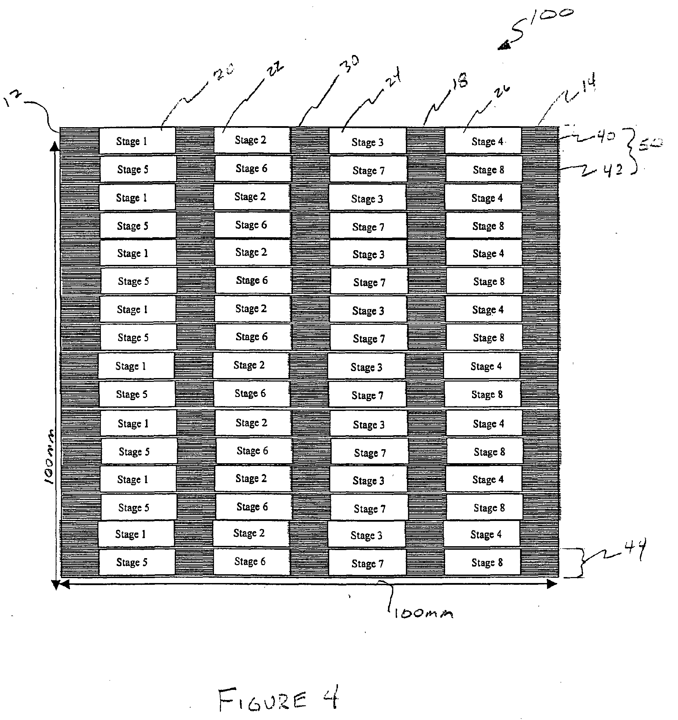

Figure 2 is an optical circuit layout of the schematic shown in Figure 1. Eight stages 20 are disposed on silicon substrate 30. Substrate 30 has a surface area of 68mm x 68mm. Thus, only one 8 x 8 switch can be fabricated on a 4" silicon wafer because the total length of the switching units exceeds the diameter of the wafer. Figure 3 is a 16 x 16 version of matrix switch 10 depicted in Figure 1. Sixteen stages 20 are disposed on silicon substrate 30. Substrate 30 has a surface area of 107mm x 100mm. Likewise, only one 16 x 16 switch can be fabricated on a 6" silicon wafer because the total length of the switching units exceeds the diameter of the wafer. In both optical circuit layouts, curvature must be introduced between switching stages to accommodate N x N switching units. Input waveguides 12 and output waveguides 14 are also curved.

The optical circuit layout designs presented in Figure 2 and Figure 3 have several major drawbacks. First, this design can only accommodate a small number of components per wafer. Second, this design provides a low wafer yield. A defect in one switching unit can affect the utility of the entire device. Thus, an isolated defect from photolithography, etching, or improper deposition of a silica layer will produce scrap or necessitate a costly repair. Finally, the design presented above can produce a lossy device. Depending on the index step, the radius of curvature of the waveguides 12, 14, and 18 must stay above a minimum threshold value to avoid high bending losses. For example, for 0.75% index step, the minimum bend radius is 5mm to achieve 0.1 dB per 90° arc.

What is needed are optical circuit layouts that eliminate the aforementioned disadvantages. An improved circuit layout is needed that increases the number of components disposed on a wafer. Defective portions of the device must be readily isolated such that production defects do not render the entire device unusable. A device is needed that eliminates the problems associated with waveguide curvature between stages.

### Summary of the Invention

The present invention overcomes the aforementioned disadvantages as well as others. In accordance with the teachings of the present invention, an improved optical circuit device is presented that eliminates the curvature between planar units. Thus, the number of components disposed on a wafer is increased because all of the surface area of the wafer is effectively utilized. No surface area is lost to curvature. Up to 16 rows of 4 stages per row can be accommodated on a single 6" wafer. This is a four-fold increase over the methods presently being used. Yield is increased because a defective row can be separated from the optical device. The remaining functional rows can be used. Finally, by eliminating waveguide curvature between stages, the problems associated with waveguide curvature are likewise eliminated.

One aspect of the present invention is an optical device. The optical device includes a first row of M optical circuit stages. Each of the M optical circuit stages is connected to an adjacent optical circuit stage by N parallel waveguides having substantially no curvature. The optical device also includes a second row of M optical circuit stages, each of the M optical circuit stages being connected to an adjacent optical circuit stage by N parallel waveguides having substantially no curvature. The first row is coupled to the second row to form a multi-stage planar device. N and M are integers.

In another aspect, the present invention includes a method for making an optical device. The method includes the step of providing a planar device having a first row of M optical circuit stages. Each of the M optical circuit stages is connected to an adjacent optical circuit stage by N parallel waveguides having substantially no curvature. A second row of M optical circuit stages is disposed adjacent to the first row, each of the M optical circuit stages being connected to an adjacent optical circuit stage by N parallel waveguides having substantially no curvature, wherein N and M are integers. The planar device is separated into a first component and a second component, the first component including the first row, and the second component including the second row. The first component is coupled to the second component to form a multi-stage optical circuit.

In another aspect, the present invention includes a method for fabricating an optical switch fabric. A substrate is provided. A matrix of optical circuit stages is disposed on the substrate. Each of the optical circuit stages is connected to an adjacent optical circuit stage by N parallel waveguides extending in a first direction to form at least one row of M optical circuit stages. The parallel waveguides have substantially no curvature. N and M are integers.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operation of the invention.

### Brief Description of the Drawings

Figure 1 is a schematic view of an 8 x 8 switch;
Figure 2 is a circuit layout of the 8 x 8 switch depicted in Figure 1;
Figure 3 is a circuit layout of a 16 x 16 version of the switch shown in Figure 1;
Figure 4 is a matrix of optical circuit stages disposed on a wafer in accordance with the present invention;
Figure 5 is an example of an 8 x 8 optical circuit using optical fiber connections in accordance with the present invention; and
Figure 6 is an example of an 8 x 8 switch using a chip-to-chip connection in accordance with the present invention.

### Detailed Description of the Preferred Embodiments

Reference will now be made in detail to the present preferred embodiments of the invention, examples of which are illustrated in the accompanying drawings. Wherever possible, the same reference numbers will be used throughout the drawings to refer to the same or like parts. An exemplary embodiment of the optical device of the present invention is shown in Figure 4, and is designated generally throughout by reference numeral 100.

In accordance with the invention, the present invention for an optical device, and a method of fabricating an optical device, includes a planar device having rows of M optical circuit stages. Each optical circuit stage is connected to an adjacent optical circuit stage by N parallel waveguides. The N parallel waveguides have substantially no curvature. The circuit layout of the switch fabric increases the number of components that can be disposed on a wafer. Defective portions of the device can be readily isolated such that production defects do not render the entire device unusable. The planar optical circuits of the present invention eliminates many of the problems associated with waveguide curvature between stages.

As embodied herein, and depicted in Figure 4, a planar optical device according to the present invention is disclosed. Planar device 100 includes 16 rows 40 of optical circuit stages 20 disposed on silicon substrate 30. Each row 40 includes adjacent optical circuit stages 20, 22, 24, and 26. Input waveguides 12 are connected to optical circuit stage 20. Optical circuit stages 20, 22, 24, and 26 are connected to their adjacent optical circuit stages by 8 parallel waveguides 18. Parallel waveguides 18 are linear, having substantially no curvature. Optical circuit stage 26 is connected to output waveguides 14.

Stages 20, 22, 24, and 26 may employ any optical circuit, but by way of example, the optical circuit shown in Figure 4 are double Mach-Zehnder Interferometer (MZI) switching stages using thermooptic switch actuators. One of ordinary skill in the art will recognize that other optical circuits suitable for use in planar devices may also be utilized depending on the application. For example, an optical circuit stage can include Y-digital optical switches, directional couplers, or MEMS devices. The optical circuit stages may employ various types of actuators such as electro-optic, electrostatic, magnetic, mechanical, as well as thermooptic. Waveguides 12, 14, and 18 may be of any suitable type but there is shown by way of example silica waveguides disposed on silicon wafer 30. One of ordinary skill in the art will recognize that waveguides may be implemented using polymer materials or other semiconductor materials. As a nonlimiting example, waveguides 12, 14, and 18 may be formed using common techniques of lithography, etching and silica deposition.

In Figure 4, 64 switching stages are accommodated by substrate 30. One of ordinary skill in the art will recognize that the number of rows (40, 42,...44) the number of stages 20, and the number of waveguides 12, 14, and 18 disposed on substrate 30 may vary depending on the N x N switch design (N being equal to 2^{y}, y being an integer), size of substrate 30 and the width of switching stage 20.

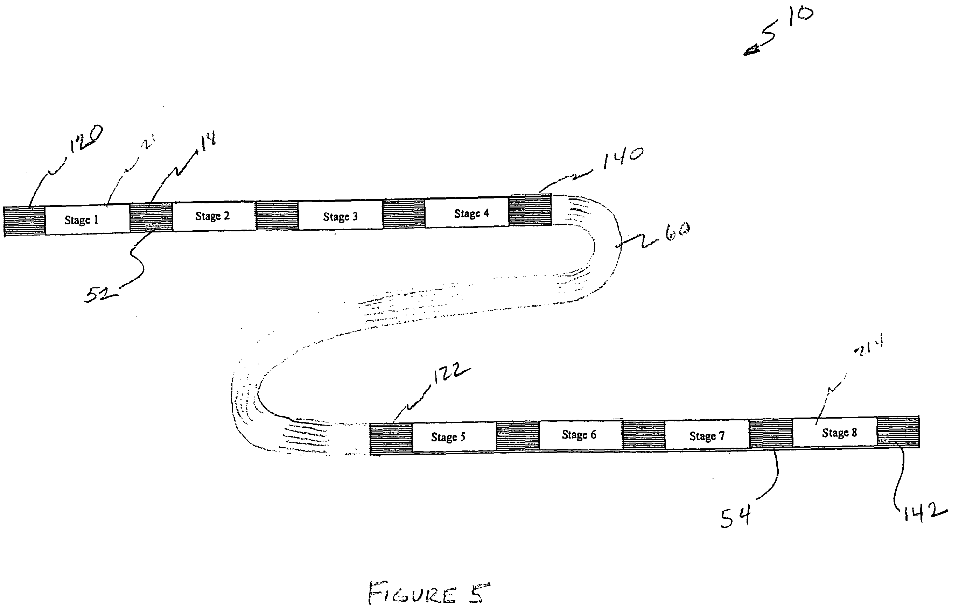

As embodied herein and depicted in Figure 5, an N x N strictly non-blocking integrated optical matrix switch 10 is disclosed. The N x N strictly non-blocking integrated optical matrix switch is fabricated by separating rows 40 and 42 (see Figure 4) into a discrete component 50 which includes the N stages 20 included in an N x N switch. Component 50 is further divided into sub-components 50 and 52, which correspond to row 40 and row 42, respectively. Thus, substrate 30 yields 16 sub-components. Referring back to Figure 5, sub-components 52 and 54 are optically coupled by connecting optical fibers 60 between output waveguides 140 and input waveguides 122. Input waveguides 120 are also the input waveguides of sub-component 52.

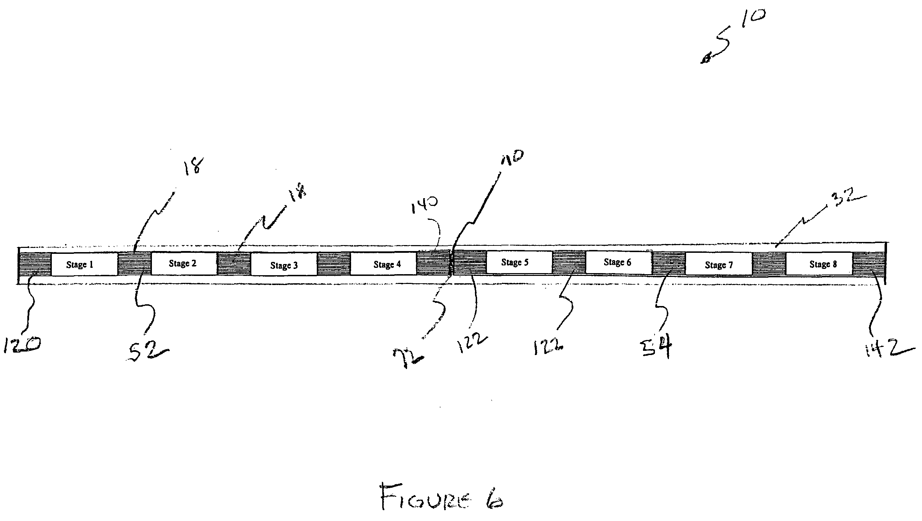

As embodied herein and depicted in Figure 6, an alternate embodiment of the N x N strictly non-blocking integrated optical matrix switch 10 of the present invention is disclosed. In this example, sub-components 52 and 54 are optically coupled using chip-to-chip connection 70 between output waveguides 140 and input waveguides 122. Chip-to-chip connection 70 may be of any suitable type, but there is shown by way of example, an adhesive used to bond sub-component 52 to sub-component 54. It will be apparent to those of ordinary skill in the pertinent art that modifications and variations can be made to chip-to-chip connection 70 depending on the application. Laser-weld or mass pigtailing techniques can be used to connect sub-component 52 to sub-component 54, as well as aligning and mounting sub-components 52 and 54 on an alignment substrate 32. One of ordinary skill in the art will recognize that any number of sub-components (50, 52...) can be connected end-to-end. Thus, instead of connecting two sub-components end-to-end, N sub-components can be connected end-to-end. N being an integer number of components greater than one.

In another alternative embodiment of the invention, as embodied herein and as shown in Figure 6, chip-to-chip connection 70 also includes index-matching material 72 disposed in a gap between sub-component 52 and sub-component 54. Index-matching material 72 prevents optical signals from de-collimating as they propagate between output waveguides 140 and input waveguides 122.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.

## Claims

1. An optical device, comprising:
a first row of M optical circuit stages, each of the M optical circuit stages being connected to an adjacent optical circuit stage by N parallel waveguides having substantially no curvature; and
a second row of M optical circuit stages, each of the M optical circuit stages being connected to an adjacent optical circuit stage by N parallel waveguides having substantially no curvature, wherein the first row is coupled to the second row to form a multi-stage planar device, and N and M are integers.

2. The optical device of claim 1, wherein each of the M optical circuit stages includes N-optical circuit units to form an N x N multi-stage planar device.

3. The optical device of claim 2, wherein the optical circuit unit includes a switching device.

4. The optical device of claim 3, wherein the switching device includes a Mach-Zehnder switch.

5. The optical device of claim 3, wherein the switching device includes a Y-digital optical switch.

6. The optical device of claim 2, wherein each optical circuit unit includes a directional coupler.

7. The optical device of claim 2, wherein each optical circuit unit includes a MEMS device.

8. The optical device of claim 2, wherein each optical circuit unit includes a thermooptical actuator.

9. The optical device of claim 2, wherein each optical circuit unit includes a mechanical actuator.

10. The optical device of claim 2, wherein each optical circuit unit includes an electro-optical actuator.

11. The optical device of claim 2, wherein each optical circuit unit includes an electrostatic actuator.

12. The optical device of claim 2, wherein each optical circuit unit includes a magnetic actuator.

13. The optical device of claim 2, wherein each optical circuit unit includes a electro-optical actuator.

14. The optical device of claim 1, wherein the first row is coupled to the second row by optical fibers.

15. The optical device of claim 1, wherein the first row is connected to the second row by a chip-to-chip connection.

16. The optical device of claim 15, wherein the chip-to-chip connection includes a laser weld.

17. The optical device of claim 15, wherein the chip-to-chip connection includes an adhesive.

18. The optical device of claim 15, wherein the chip-to-chip connection is implemented using a mass pigtailing technique.

19. The optical device of claim 15, wherein the chip-to-chip connection includes aligning and mounting the first row and the second row on an alignment substrate.

20. The optical device of claim 15, wherein index-matching material is disposed between the first row and the second row.

21. A method for making an optical device comprising the steps of:
providing a planar device having a plurality of rows, each of the plurality of rows having M optical circuit stages, each of the M optical circuit stages being connected to an adjacent optical circuit stage by N parallel waveguides having substantially no curvature, wherein N and M are integers;
separating the planar device into a plurality of discrete components, wherein each discrete component includes a row of the plurality of rows; and
coupling the plurality of discrete components to form a multi-stage planar device.

22. The method of claim 21, wherein the step of providing includes providing each component with N input waveguides and N output waveguides.

23. The method of claim 22, wherein the step of coupling includes connecting the N output waveguides of a discrete component to the N input waveguides of an adjacent discrete component with optical fiber.

24. The method of claim 22, wherein the step of coupling includes connecting the N output waveguides of a discrete component to the N input waveguides of an adjacent discrete component using a chip-to-chip connection.

25. The method of claim 22, wherein the step of coupling includes connecting the N output waveguides of a discrete component to the N input waveguides of an adjacent discrete component by laser welding.

26. The method of claim 22, wherein the step of coupling includes connecting the N output waveguides of a discrete component to the N input waveguides of an adjacent discrete component using an adhesive.

27. The method of claim 22, wherein the step of coupling includes disposing index-matching material between adjacent discrete components.

28. The method of claim 21, wherein the planar device is an N x N switch fabric.

29. A method for fabricating an optical circuit fabric comprising the steps of:
providing a substrate;
disposing a matrix of optical circuit stages on the substrate, each of the optical circuit stages being connected to an adjacent optical circuit stage by N parallel waveguides extending in a first direction to form at least one row of M optical circuit stages, wherein the parallel waveguides have substantially no curvature, and N and M are integers.

30. The method of claim 29, further comprising the steps of:
separating the at least one row of M-optical circuit stages into a plurality of optical circuit components; and
coupling the plurality of optical circuit components to form a multi-stage planar device.

31. The method of claim 29, wherein the substrate is comprised of silicon.

32. The method of claim 29, wherein the substrate is comprised of silica.

33. The method of claim 29, wherein the waveguides are comprised of a silica material.

34. The method of claim 29, wherein the waveguides are comprised of a polymer material.

35. The method of claim 29, wherein the waveguides are comprised of a semiconductor material.

36. The method of claim 29, wherein the substrate has an approximate surface area of 100mm x 100mm.
